# FASCICULE DE BREVET EUROPEEN

(11) **EP 2 379 364 B1**
(45) Date de publication et mention de la délivrance du brevet: **09.03.2016**
(21) Numéro de dépôt: 09799105.3
(22) Date de dépôt: 22.12.2009
(51) Int. Cl.: B60L 11/18, B60L 5/42, B60M 7/00, B60M 1/36, B60K 1/04

(54) **SYSTEME DE CONNEXION POUR LA CHARGE D'UN VEHICULE ELECTRIQUE**
VERBINDUNGSSYSTEM ZUM LADEN EINES ELEKTRISCHEN FAHRZEUGS
CONNECTION SYSTEM FOR CHARGING AN ELECTRIC VEHICLE

(30) Priorité: 22.12.2008 FR 0858929
(43) Date de publication de la demande: 26.10.2011
(73) Titulaire: Conductix Wampfler France, 92700 Colombes (FR)
(72) Inventeur: LACOUR, Gilles, F-01300 Belley (FR)
(74) Mandataire: Regimbeau
(86) Numéro de dépôt international: PCT/EP2009/067800
(87) Numéro de publication internationale: WO 2010/072786

(56) Documents cités:
- DE-A1- 2 519 976
- JP-A- 63 234 803
- US-E- R E29 994

## Description

### DOMAINE TECHNIQUE

La présente invention concerne le domaine technique des dispositifs permettant de charger/recharger des moyens de stockage d'énergie électrique d'un véhicule comprenant un moteur électrique.

### ETAT DE LA TECHNIQUE

On a déjà développé des dispositifs permettant de recharger les moyens de stockage d'énergie d'un véhicule à entraînement électrique.

Une approche consiste à équiper le véhicule d'un cordon d'alimentation comprenant à une extrémité libre un connecteur apte à coopérer avec un connecteur complémentaire relié à une source d'énergie électrique externe. En variante, le cordon d'alimentation est relié à la source électrique et se connecte sur un connecteur prévu sur le véhicule. Toutefois, ceci nécessite que l'utilisateur descende de son véhicule pour raccorder manuellement la source d'énergie électrique aux moyens de stockage à l'aide du cordon. Ceci est fastidieux et engendre un risque d'électrocution en cas de mauvaise manipulation.

Pour remédier à cet inconvénient, on connaît de US 6 265 261 un dispositif d'alimentation automatique destiné à un véhicule électrique. Ce dispositif d'alimentation peut être mis en oeuvre sur un rail disposé au sol relié à une source d'énergie électrique. Pour assurer un positionnement précis du véhicule par rapport au rail, le dispositif comprend, côté véhicule, un élément en forme de U inversé dont les parois latérales sont destinées à venir de part et d'autre du rail de sorte que l'élément en forme de U inversé coiffe le rail. Toutefois, un inconvénient de ce dispositif d'alimentation est qu'ils requièrent un positionnement précis du véhicule par rapport au rail pour permettre la mise en contact du rail et de l'élément en U inversé

On connaît également de US 5 461 298 un dispositif d'alimentation utilisant des informations d'alignement du véhicule par rapport à la source d'énergie électrique pour permettre un amarrage précis du véhicule à cette source d'énergie. Là encore, le dispositif de charge nécessite un positionnement précis du véhicule par rapport à la source d'énergie électrique.

Pour palier ces inconvénients, US 5 523 666 propose un dispositif d'alimentation en énergie électrique comprenant un élément de contact côté véhicule destiné à venir en contact avec un élément complémentaire disposé sur la source d'énergie électrique. Un émetteur côté véhicule permet la transmission à la source d'énergie de données concernant la position instantanée en hauteur de l'élément de contact du véhicule. Des moyens de déplacement permettent le réglage en hauteur de l'élément complémentaire de la source d'énergie en fonction de ces informations sur la hauteur de l'élément de contact. Ceci permet d'adapter automatiquement les hauteurs de l'élément de contact et de l'élément complémentaire. Toutefois, un inconvénient de ce dispositif d'alimentation est qu'il permet uniquement une tolérance en hauteur sur le positionnement du véhicule.

Pour s'affranchir des contraintes sur le positionnement du véhicule, US 5 431 264 propose un système d'alimentation en énergie électrique par induction. Toutefois, ce type de système d'alimentation par induction présente de nombreux inconvénient. Notamment, un champ électromagnétique puissant est généré pour permettre la recharge du véhicule. Or un tel champ électromagnétique peut nuire à l'intégrité physique de l'utilisateur ou des autres personnes situées à proximité du champ magnétique.

Le document JP63234803 décrit un dispositif collecteur de courant comprenant un patin disposé sur un véhicule et destiné à venir en contact avec un rail électriquement conducteur disposé au sol.

Le document USRE29994E décrit un dispositif de connexion électrique d'un véhicule comportant une perche sur le toit du véhicule et un frotteur à l'extrémité distale de la perche, le frotteur étant destiné à venir en contact avec une paire de lignes aériennes pour la connexion électrique du véhicule.

Le document DE2519976 décrit un système de transmission de courant pour véhicule électrique comprenant un bras et une roulette à l'extrémité distale du bras, la roulette étant destinée à venir en contact avec des barres électriquement conductrices s'étendant au sol.

Un but de la présente invention est de proposer un dispositif de recharge automatique de moyens de stockage d'énergie électrique permettant de pallier les inconvénients précités.

Un autre but de la présente invention est de proposer un dispositif de recharge sécurisé et plus robuste que les dispositifs de l'art antérieur.

### RESUME DE L'INVENTION

A cet effet on propose un système de connexion électrique d'un véhicule automobile à entraînement électrique conforme à la revendication 1.

La solution proposée présente de ombreux avantages. Notamment, elle peut être mise en place dans des environnements où la solution du câble aérien n'est pas adaptée, comme par exemple les espaces couverts. Elle permet également de recharger des véhicules ayant des hauteurs quelconques. Par ailleurs, la solution proposée permet une grande tolérance sur le positionnement du véhicule par rapport aux contacts électriques situés dans le sol.

Des aspects préférés mais non limitatifs du système selon l'invention sont les suivants :
- les moyens de protection sont déplaçables par rapport au châssis du véhicule,
- les moyens de protection comprennent au moins un capot adapté pour se déplacer par pivotement autour d'un axe de pivotement parallèle à l'axe longitudinal de la barre,
- l'axe de pivotement est situé entre l'axe longitudinal de la barré et une face latérale du véhicule,
- l'axe de pivotement et l'axe longitudinal sont situés à la verticale l'un de l'autre,
- la barre est déplaçable par rapport au châssis,
- la ou chaque barre possède un corps protecteur sur lequel est montée une partie conductrice, et dans lequel la ou chaque barre est déplaçable entre une position d'utilisation où ladite partie conductrice est tournée vers le bas et dégagée et une position de non-utilisation ou ladite partie conductrice est abritée,
- le corps protecteur est soit électriquement isolant, soit électriquement isolé de la partie conductrice,
- la ou chaque barre est déplaçable en pivotement autour d'un axe parallèle à son grand axe,
- chaque barre présente des faces cylindriques d'axe confondu avec son axe de pivotement, et est logé dans une chambre possédant des parois venant avoisiner lesdites faces cylindriques,
- l'axe de pivotement est s'étend le long d'une arrête de la barre de sorte que dans la position d'utilisation, la partie conductrice est tournée vers le bas et dégagée et dans la position de non-utilisation, ladite partie conductrice est tournée vers le haut,
- le système comprend en outre des moyens pour autoriser un jeu angulaire de la barre de sorte à permettre un contact à plat entre la barre et la plaque,
- au moins l'une des extrémités de la ou chaque barre électriquement conductrice comprend une spatule,
- le système comprend une barre unique comportant deux segments électriquement conducteurs reliés entre eux par une portion isolante électriquement, chaque segment électriquement conducteur étant connecté électriquement à une borne respective des moyens de stockage,
- le système comprend deux barres électriquement conductrices connectées à des bornes respectives des moyens de stockage,
- les deux barres s'étendent parallèlement l'une à l'autre,
- le système comprend des moyens de commutation T_{princ1}, T_{princ2} pour connecter les moyens de stockage soit aux barres, soit au moteur du véhicule,
- le système comprend des moyens de commutation T1-T6 pour réaliser un couplage en série ou en parallèle des moyens de stockage.

L'invention concerne également un véhicule automobile à entraînement électrique comprenant des moyens de stockage d'énergie électrique, le véhicule comprenant également un système de connexion ayant les caractéristiques ci-dessus.

### BREVE DESCRIPTION DES FIGURES

D'autres caractéristiques, buts et avantages de la présente invention ressortiront encore de la description qui suit, laquelle est purement illustrative et non limitative et doit être lue au regard dés dessins annexés sur lesquels :
- la figure 1 est une représentation schématique en perspective d'un ensemble de connexion selon l'invention,
- la figure 2a est une représentation schématique en perspective d'un mode de réalisation du système de connexion et du système de couplage selon l'invention ;
- la figure 2b est une représentation schématique plus détaillée des moyens de couplage illustrés à la figure 2a ;
- les figures 3a, 3b, 3'a à 3'c, 4a à 4d, 4'a, 4'b et 5a, 5b, 5c sont des représentations schématiques de portions du système de connexion selon l'invention ;
- les figures 6 à 9 sont des représentations schématiques de différents modes de réalisation du système de couplage selon l'invention
- les figures 10a à 10c sont des représentations schématiques de diverses variantes de réalisation du dispositif de charge selon l'invention ;
- les figures 11a et 11b sont des vues de dessus de deux exemples de réalisation du système de couplage selon l'invention ;
- Les figures 12 à 17 sont des représentations schématiques de modes de réalisation de l'ensemble de connexion selon l'invention.

### DESCRIPTION DETAILLEE DE FORMES DE REALISATION PREFEREES DE L'INVENTION

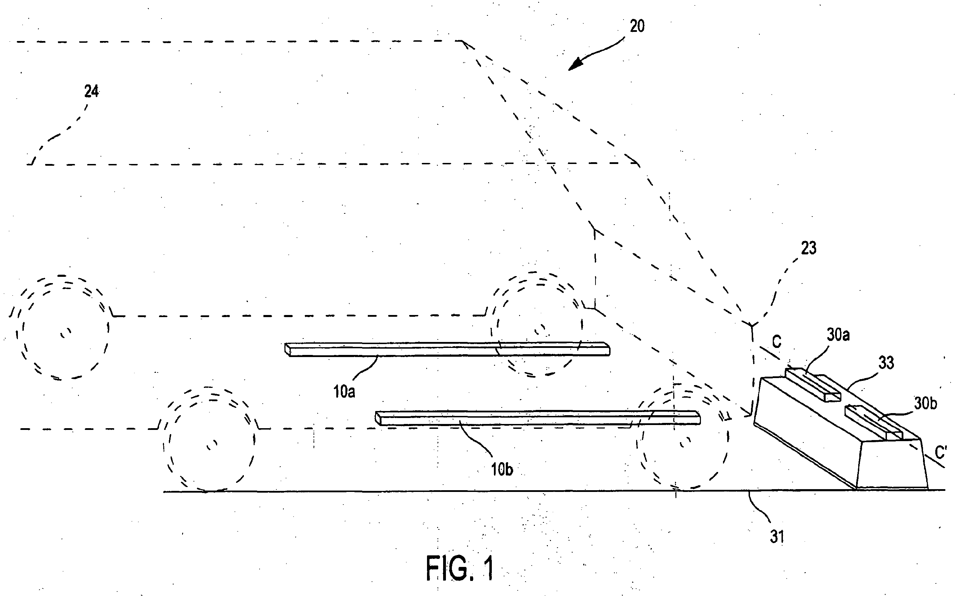

On va maintenant décrire plus en détail l'invention en référence aux figures 1 à 17 qui sont des représentations schématiques de différents modes de réalisation de l'invention.

### Principe général de l'invention

En référence à la figure 1, on a illustré un mode de réalisation de l'ensemble de connexion électrique selon l'invention pour la charge de moyens de stockage d'énergie d'un véhicule automobile à entraînement électrique 2.

L'ensemble de connexion électrique comprend :
- un système de connexion électrique côté véhicule, et
- un système de couplage au niveau d'un sol où le véhicule peut être amené.

Dans le mode de réalisation illustré à la figure 1, le système de connexion électrique comprend deux barrés 10a, 10b électriquement conductrices s'étendant au-dessous du véhicule, à proximité du sol, entre des régions avant 23 et arrière 24 du véhicule. Les barres électriquement conductrices s'étendent parallèlement à un axe longitudinal du véhicule. Ces barres électriquement conductrices sont connectées électriquement à des bornes respectives de moyens de stockage d'énergie électrique (non représentés) du véhicule, tels que des batteries lithium-ion, des supercondensateurs, une combinaison des deux.

Le système de couplage comprend deux plaques de contact 30a, 30b électriquement conductrices. Ces plaques 30a, 30b électriquement conductrices sont disposées au sol 31. Plus précisément, les plaques 30a, 30b sont dans le présent exemple montées sur un plot 33 électriquement isolant en saillie vers le haut à partir du sol 31. En variante, chaque plaque pourrait être montée sur son propre plot. Les plaques 30a, 30b sont connectées électriquement à un dispositif de charge pour la charge électrique des moyens de stockage d'énergie du véhicule. Elles ont ici des grands axes qui s'étendent selon une même direction C-C' généralement transversale à la direction de déplacement du véhicule.

Le principe général de fonctionnement de l'ensemble de connexion selon l'invention est le suivant.

Pour charger et/ou recharger le véhicule, celui-ci est déplacé de sorte à venir au dessus des plaques 30a, 30b électriquement conductrices.

Avantageusement, la surface supérieure des plaques 30a, 30b se situe au-dessus du sol à une distance verticale du sol supérieure à la distance verticale entre la surface inférieure des barres du système de connexion et le sol lorsque le véhicule n'est pas en position de connexion.

Lorsque le véhicule est au dessus du plot 33, les barres 10a, 10b entrent en contact avec les plaques 30a, 30b électriquement conductrices. Dans le présent exemple, le véhicule est suspendu et possède une garde-au-sol variable et c'est la variation de son assiette ainsi autorisée qui permet de compenser la différence de hauteur entre les surfaces inférieures des barres 10a, 10b et les surfaces supérieures des plaques 30a, 30b.

Une fois les surfaces inférieures des barres 10a, 10b en contact avec les surfaces supérieures des plaques 30a, 30b, le véhicule s'immobilise. Le dispositif de charge est alors en contact électrique avec les moyens de stockage du véhicules par l'intermédiaire de l'ensemble de connexion selon l'invention. Le dispositif de charge est alors mis en service pour permettre de charger/recharger les moyens de stockages du véhicule.

Un des avantages de l'ensemble de connexion décrit ci-dessus est qu'il permet une grande tolérance sur le positionnement du véhicule par rapport aux contacts électriques situés dans le sol, à la fois en longueur et en largeur grâce aux dimensions et aux orientations des barres et des plaques, et en hauteur grâce aux variations d'assiette du véhicule.

On va maintenant décrire plus en détail différents modes de réalisation de l'ensemble de connexion selon l'invention.

### Système de connexion

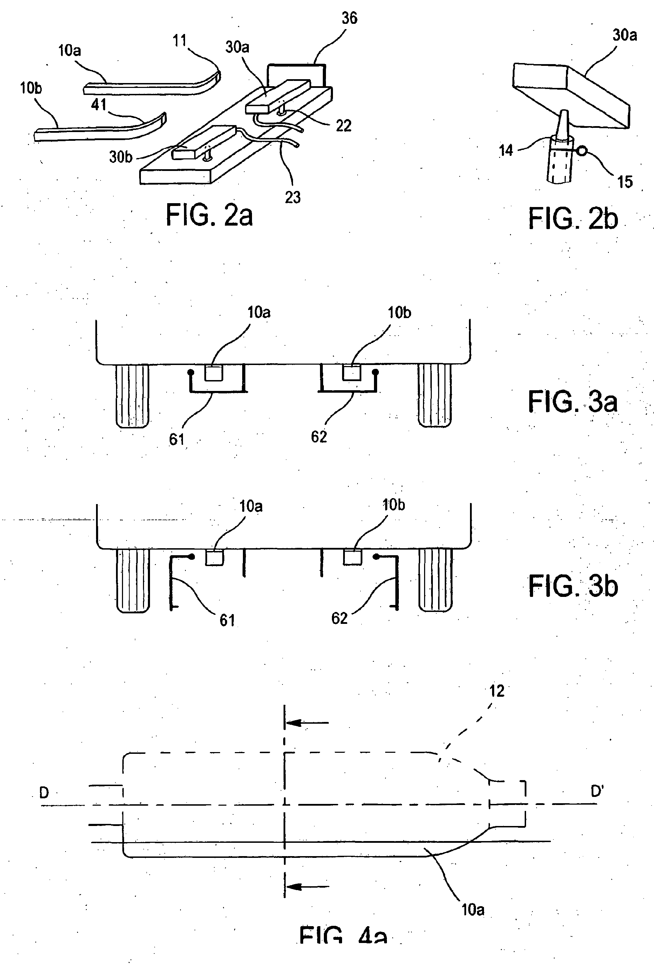

En référence à la figure 2, on a illustré une variante d'exécution du système de connexion selon l'invention. Dans cette variante, chaque barre électriquement conductrice comprend à l'une (ou à ses deux) extrémité(s) une spatule 11, 41.

Ces spatules 11, 41 permettent de faciliter le passage des barres 10a, 10b sur les plaques 30a, 30b lorsque le véhicule se déplace pour amener les barres au dessus des plaques. Ainsi, si l'on choisit une hauteur (par rapport au sol) de la surface supérieure des plaques 30a, 30b qui est légèrement supérieure à la distance de la surface inférieure des barres 10a, 10b par rapport au sol, alors les spatules sont propres à créer progressivement une élévation de l'assiette du véhicule pour effectuer facilement une auto-adaptation de la hauteur.

Selon une variante de réalisation non illustrée, on peut prévoir que les barres 10a, 10b soient montées de façon déplaçable au-dessous du véhicule (par exemple avec un servo-moteur, des ressorts de compensation, etc.) de manière à annuler les différences de hauteur entre la surface supérieure des plaques 30a, 30b et la surface inférieure des barres 10a, 10b.

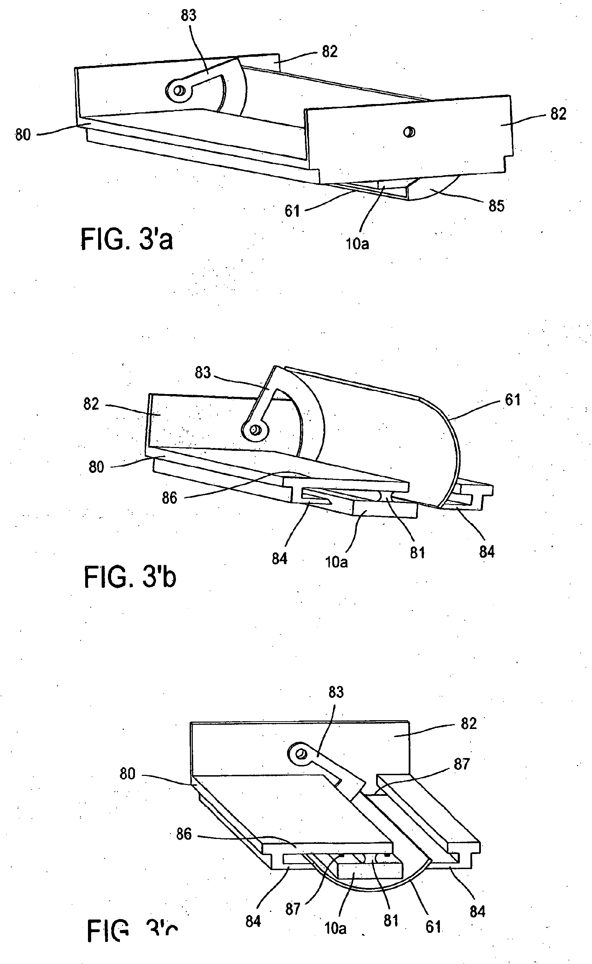

On a illustré aux figures 3a, 3b, et 3'a à 3'c d'autres modes de réalisation du système de connexion selon l'invention.

Dans ces modes de réalisation, le système de connexion comprend des moyens de protection pour bloquer l'accès aux barres électriquement conductrices et pour les protéger (des chocs, des salissures, d'un contact électrique accidentel, etc.) lorsqu'elles ne sont pas en utilisation.

Dans ces différents modes de réalisation, les moyens de protection sont déplaçables par rapport au châssis du véhicule. Ceci permet de simplifier le raccordement entre les moyens de stockage et la barre. Notamment, il n'est pas nécessaire de disposer d'une souplesse dans les câbles de raccordement entre les moyens de stockage d'énergie et la barre, contrairement au cas où c'est la barre qui est déplaçable par rapport au châssis du véhicule.

Les moyens de protection pour bloquer l'accès aux barres électriquement conductrices peuvent comprendre au moins un capot.

Dans les modes de réalisation illustrés aux figures 3a, 3b et 3'a, 3'b, les moyens de protection comprennent deux capots 61, 62 associés chacun à une barre 10a, 10b. Dans un autre mode de réalisation, chaque barre est associée à deux capots 61. Chaque capot peut se déplacer entre une position ouverte, et une position fermée, par pivotement autour d'un axe de pivotement parallèle à l'axe longitudinal de la barre associée et situé à son voisinage.

Le déplacement du (ou des) capot(s) est assuré par des moyens d'entrainement qui peuvent être de tout type connu de l'homme du métier tel qu'un moteur connecté directement sur l'axe de pivotement du capot ou un galet motorisé.

Dans le mode de réalisation illustré aux figures 3a et 3b, l'axe de pivotement de chaque capot est situé entre la barre et une face latérale du véhicule.

Lorsque le véhicule est hors charge, chaque capot 61, 62 est dans la position fermée de sorte à couvrir sa barre associée, comme illustrée à la figure 3a.

Lorsque le véhicule est en charge, chaque capot est dans la position ouverte de sorte à former une jupe qui descend de la caisse du véhicule vers le sol pour limiter les risques d'accès à la barre conductrice et à la plaque associée, comme illustré à la figure 3b.

Ceci permet de limiter les risques de contact intempestif avec les plaques ou les barres en utilisation.

Lorsque le véhicule comprend une barre unique comportant deux segments électriquement conducteurs, les moyens de protection peuvent également comprendre deux capots dont les axes de pivotement sont situés de part et d'autre de la barre de sorte à couvrir la barre lorsque le véhicule est hors charge et à former une jupe lorsque le véhicule est en charge.

En référence aux figures 3'a à 3'c, les moyens de protection comprennent un logement 80 entre le véhicule et la barre 10a. Ce logement a globalement la forme d'un parallélépipède rectangle et comprend deux parois latérales 82 et un fond 86. Le fond 86 du logement comprend une fente 87 pour le passage du capot 61. Ce logement 80 est destiné à recevoir le (ou les) capot(s) lorsque celui-ci est en position ouverte (position de charge du véhicule).

Dans le mode de réalisation illustré aux figure 3'a à 3'c, le capot 61 s'étend longitudinalement et présente une forme incurvée selon son axe longitudinal.

La barre 10a est fixée sur une face du logement 80 en regard de la route par l'intermédiaire d'une attache flexible 81 de sorte à autoriser un jeu angulaire de la barre 10a selon son axe longitudinal. Le logement 80 est connecté au planché du véhicule par ses parois latérale 82 situées au niveau des extrémités de la barre 10a.

Le capot 61 est fixé au logement 80 par des pattes 83 liées à pivotement aux parois latérales 82 du logement 80.

Les pattes 83 peuvent être connectées sur les faces internes ou externes des parois latérales 82. Dans le cas où les pattes 83 sont liées à pivotement sur les faces externes des parois latérales 82, des fentes sont pratiquées dans les parois latérales 82 pour le passage du capot 61 entre les positions ouverte et fermée.

De préférence, les pattes 83 sont liées à pivotement sur les faces externes des parois latérales 82. Ceci permet d'assurer l'étanchéité du logement puisqu'il n'est alors plus nécessaire de pratiquer des fentes dans les parois latérales 82 du logement 80.

Le fond 86 du logement 80 comprend également des racleurs 84 en forme de L disposés de part et d'autre de la barre 10a. Ces racleurs 84 sont agencés de sorte, qu'en position fermée, le capot 61 est à proximité immédiate - c'est-à-dire à une distance comprise entre 0 et 1 centimètre - de l'extrémité libre de chaque racleur 84. Chaque racleur 84 peut être métallique. Chaque racleur 84 peut comprendre à son extrémité libre un joint à lèvre pour assurer l'étanchéité entre le racleur et le capot lorsque celui-ci est en position fermée.

Le capot comprend .en outre une jupe 85 au niveau de ses bords latéraux.

Les racleurs 84, les parois latérales 82 du logement 80 et les jupes 85 du capot 61 permettent d'assurer l'étanchéité du dispositif lorsque le capot est en position fermée.

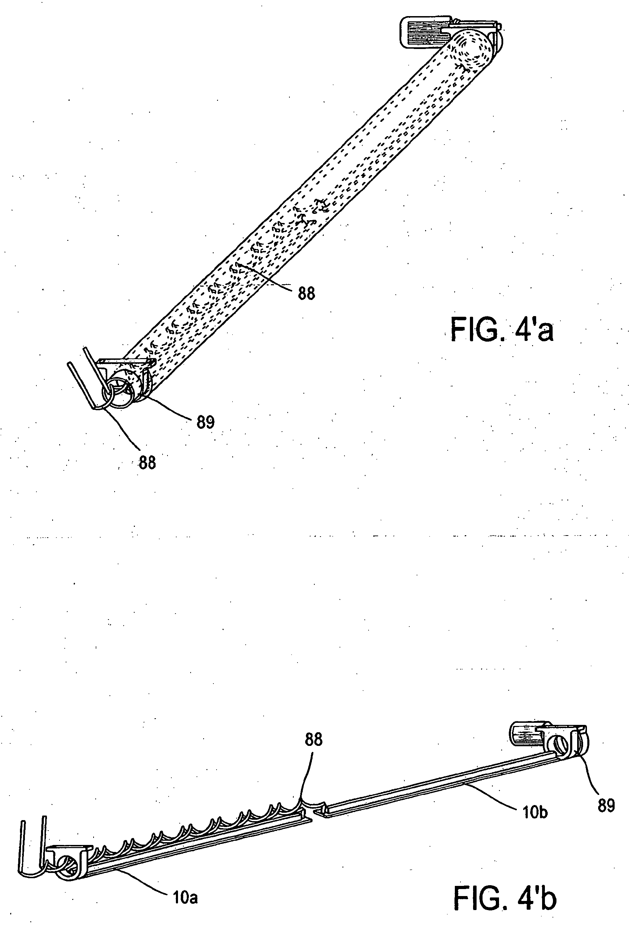

En référence aux figures 4a à 4d, on a illustré un autre mode de réalisation dans lequel la barre est déplaçable par rapport au châssis.

Dans le mode de réalisation illustré aux figures 4a à 4d, chaque barre 10a ou 10b électriquement conductrice est fixée respectivement sur un méplat d'un support 12. Le support peut être constitué dans un matériau isolant électriquement. Le support cylindrique peut également être constitué dans un matériau conducteur électriquement et isolé électriquement de la barre.

Le support 12 s'étend selon l'axe longitudinal du véhicule. La longueur du support cylindrique 12 peut être supérieure ou égale à la longueur de la barre 10a à laquelle il est associé.

Le support 12 est apte à pivoter autour de son axe longitudinal D-D' en étant assujetti à des moyens d'entraînement (non représentés) aptes à être commandés. Les moyens d'entraînement sont par exemple un moteur qui permet de faire pivoter le support cylindrique entre une position dégagée et une position escamotée.

Dans le mode de réalisation illustré aux figures 4a à 4c, le support 12 est cylindrique. Ce support cylindrique 12 est monté dans une ossature 40 possédant une ouverture longitudinale dans laquelle s'étend la barre, 10a ou 10b sensiblement au niveau de son plan diamétral horizontal.

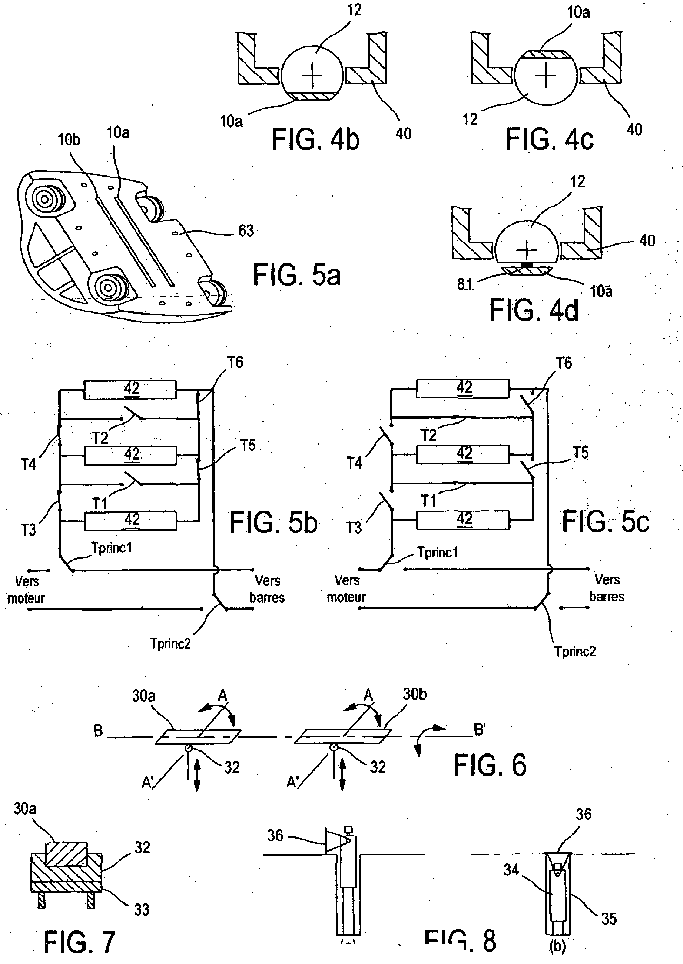

Dans la position dégagée illustrée à la figure 4b, la barre (ici 10a) s'étend à la base du support 12 et peut venir en contact avec sa plaque respective (position de charge).

Dans la position escamotée illustrée à la figure 4c, la barre 10a est située en partie supérieure du support 12, qui a été tourné sur 180°. Dans cette position le support cylindrique 12 et l'ossature 40 contribuent à protéger la barre 10a des chocs, gravillons et projections diverses (position de roulage).

Naturellement, les moyens de commande font pivoter les supports 12 associés aux barres 10a et 10b aux moments appropriés.

Avantageusement, à l'ossature 40 peut également être associé une raclette disposée de sorte à permettre le nettoyage de la barre électriquement conductrice 10a ou 10b par frottement à chaque pivotement du support.

Dans le mode de réalisation illustré aux figures 4a à 4d, les barres peuvent être connectées aux moyens de stockage en utilisant des câbles hélicoïdaux tel qu'illustré sur les figures 4'a et 4'b. Ceci permet de disposer d'une souplesse suffisante dans les câbles de raccordement tout en limitant l'encombrement du dispositif.

Dans le mode de réalisation illustré aux figures 3'a à 3'c, chaque barre 10a est montée avec des degrés de liberté en pivotement autour de deux axes horizontaux.

Ceci permet d'assurer une mise en contact à plat des surfaces inférieures des barres avec les surfaces supérieures des plaques lorsque les barres sont appliquées sur les plaques, notamment afin d'éviter les arcs électriques et/ou une surchauffe de l'ensemble de connexion lors du passage du courant en particulier si ce courant était véhiculé au niveau d'une simple arête ou région ponctuelle de contact.

Différents moyens peuvent permettre ce jeu angulaire des barres. Par exemple, dans un mode de réalisation, chaque barre 10a est montée sur une rotule de sorte à permettre sa mobilité en pivotement. Dans un autre mode de réalisation, chaque barre 10a est montée sur un bloc de caoutchouc lui conférant une mobilité suffisante pour assurer un bon alignement des surfaces supérieure et inférieure de la barre 10a et de la plaque 30a lors des contacts.

Dans le mode de réalisation des figures 3'a à 3'c, le jeu angulaire de la barre est assuré par l'attache flexible (par exemple en caoutchouc) entre la barre 10a et le fond du logement 80.

En variante, l'attache flexible peut être remplacée par des paliers 89 disposés aux extrémités de la barre 10a et définissant un axe de pivotement angulaire de la barre, tel qu'illustré sur les figures 4'a et 4'b.

Avantageusement, les moyens pour assurer un jeu angulaire de la barre peuvent être associés à de butées.

En référence à la figure 3'c, on a illustré de telles butées. Plus précisément, le fond du logement comprend des butées 87 électriquement isolantes s'étendant longitudinalement sur le fond 86 du logement 80. Ces butées 87 permettent d'assurer l'isolation électrique entre la barre et le logement (et plus généralement le véhicule).

Dans un autre mode de réalisation illustré à la figure 5a, le système de connexion comprend en outre des moyens de détection 63 pour détecter l'intrusion et/ou la présence d'un élément étranger sous le véhicule lors de la charge.

Ceci permet d'augmenter la sécurité de l'ensemble de connexion selon l'invention en prévenant un risque éventuel d'électrocution d'une personne lors de la charge.

Les moyens de détection 63 peuvent comprendre un (ou plusieurs) captèur(s) volumétrique(s), optiques, etc. et/ou une (ou plusieurs) caméra(s) vidéo(s) et/ou un (ou plusieurs) détecteurs de mouvement.

Ces moyens de détection 63 peuvent être fixés sous le véhicule. Les moyens de détection 63 sont connectés à des moyens de commande (non représentés) pour commander la coupure de l'alimentation électrique lorsqu'un élément étranger est détecté sous le véhicule durant la charge.

Le système de connexion peut également comprendre des moyens de commutation pour connecter les moyens de stockage 42 :
- soit aux barres 10a, 10b dans une première position (position de charge) et
- soit au moteur du véhicule dans une deuxième position (position de roulage).

On comprend alors que dans ce mode de réalisation, les moyens de stockage 42 sont déconnectés des barres 10a, 10b en position de roulage afin d'éviter un risque d'électrocution.

Les moyens de commutation comprennent par exemple deux interrupteurs commandés T_{princ1}, T_{princ2} comme illustré aux figures 5b et 5c. Dans la position de charge, les interrupteurs commandés T_{princ1}, T_{princ2} basculent dans la première position comme illustré à la figure 5b. Dans la position de roulage, les interrupteurs commandés T_{princ1}, T_{princ2} basculent dans la deuxième position comme illustré à la figure 5c.

Le système de connexion peut également comprendre des moyens de commutation pour réaliser un couplage en série ou en parallèle des moyens de stockage 42. Le couplage en parallèle des moyens de stockage 42 permet leur recharge sous basse tension de sécurité (par exemple une tension continue inférieure à 60 volts) pour garantir la protection des personnes physiques lors de la recharge du véhicule, tandis que leur couplage en série permet d'alimenter le moteur du véhicule sous une tension plus élevée et avec un courant plus bas.

Les moyens de couplage comprennent par exemple une pluralité d'interrupteurs commandés T1 à T6 aptes à basculer entre des positions ouverte et fermée, comme illustré aux figures 5b et 5c.

Lorsque le véhicule est en position de charge, les interrupteurs commandés T1 et T2 sont ouverts et les interrupteurs commandés T3 à T6 sont fermés de sorte que les moyens de stockage sont connectés en parallèle (figure 5b).

Lorsque le véhicule est en position de roulage, les interrupteurs commandés T1, T2 sont fermés et les interrupteurs T3 à T6 sont ouverts de sorte que les moyens de stockage 42 sont connectés en série (figure 5c).

### Système de couplage

En référence à la figure 6, on a illustré une variante d'exécution du système de couplage dans laquelle les plaques 30a, 30b sont montées avec des degrés de liberté en pivotement autour de deux axes horizontaux A-A' et B-B'.

Ceci permet d'assurer une mise en contact à plat des surfaces inférieures des barres avec les surfaces supérieures des plaques lorsque les barres sont appliquées sur les plaques, notamment afin d'éviter les arcs électriques et/ou une surchauffe de l'ensemble de connexion lors du passage du courant en particulier si ce courant était véhiculé au niveau d'une simple arête ou région ponctuelle de contact.

Différents moyens peuvent permettre ces degrés de liberté des plaques du système de couplage. Par exemple, dans un mode de réalisation, chaque plaque 30a, 30b est montée sur une rotule de sorte à permettre sa mobilité en pivotement comme illustré à la figure 2.

Dans un autre mode de réalisation illustré à la figure 7, chaque plaque 30a, 30b est montée sur un bloc de caoutchouc 32 lui conférant une mobilité suffisante pour assurer un bon alignement des surfaces supérieure et inférieure de la plaque 30a, 30b et de la barre respective 10a, 10b lors des contacts. Ce bloc de caoutchouc est monté sur un support 33 fixé au sol.

Bien entendu les barres 10a, 10b peuvent également être montées sur le véhicule avec les degrés de liberté appropriés.

Avantageusement, le système de couplage peut comprendre des moyens 22 pour adapter la hauteur des plaques en fonction du type de véhicule. De tels moyens de réglage sont illustrés à la figure 2b. Par exemple ils peuvent comprendre un bras télescopique 14 associé à une goupille 15 pour bloquer les plaques 30a, 30b à une hauteur déterminée.

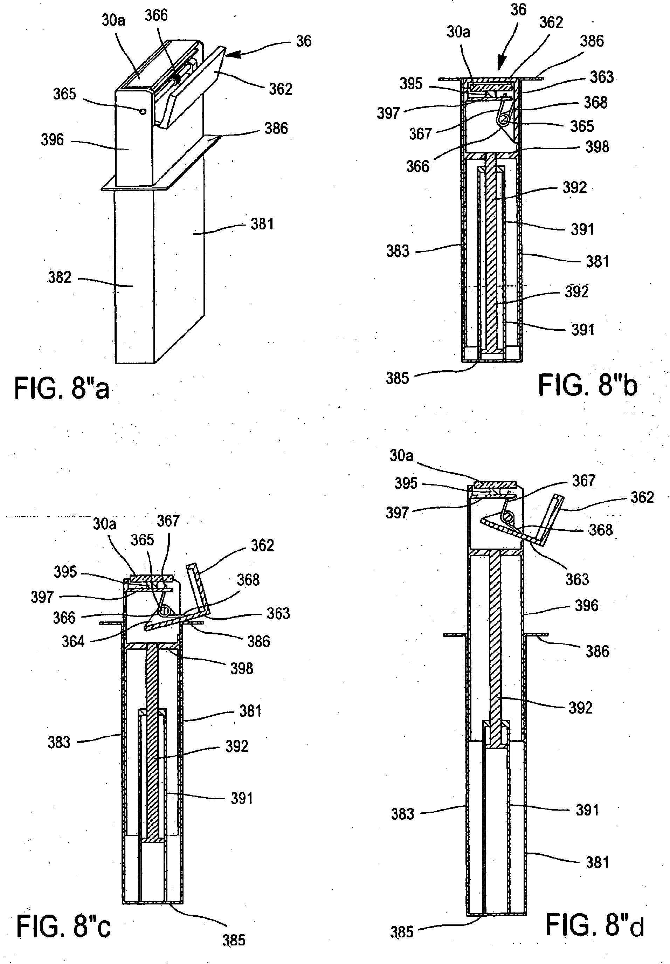

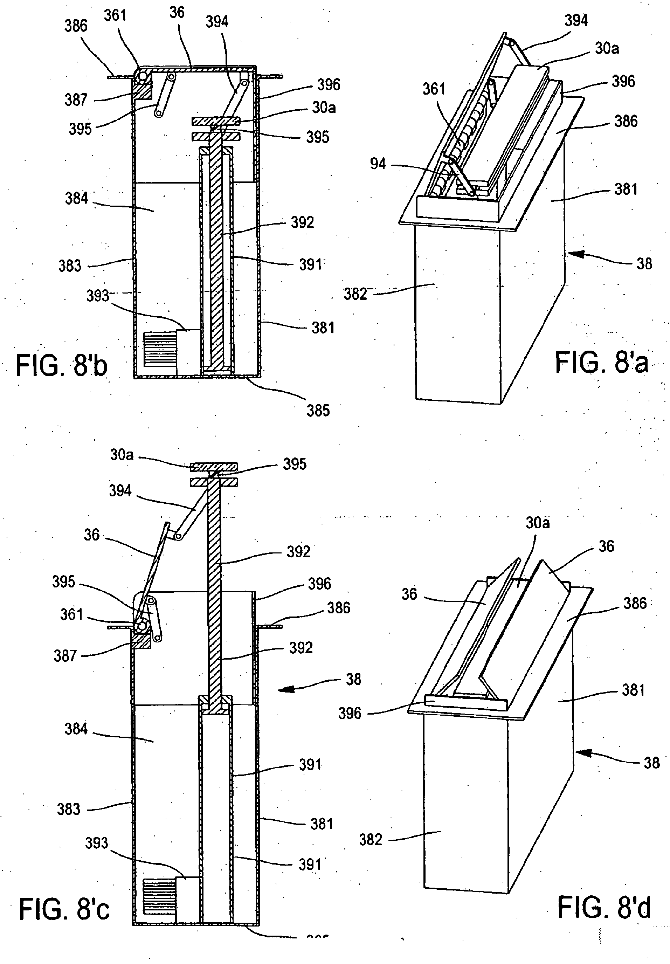

Dans un autre mode de réalisation illustré à la figure 8, le système de couplage comprend des moyens 34 aptes à déplacer les plaques 30a, 30b entre une position escamotée (figure 8b) et une position dégagée du sol (figure 8a).

Lorsque le véhicule est au dessus des plaques 30a, 30b, celles-ci sont amenées dans la position dégagée. Elles sont à nouveau escamotées lorsque la charge est terminée, pour libérer le véhicule.

Les moyens de déplacement 34 comprennent par exemple des actionneurs linéaires tels que des vérins opérant entre le sol 31 et la plaque respective 30a, 30b ou un support de celle-ci.

De préférence, la partie fixe de l'actionneur linéaire - par exemple le corps du vérin - est logé dans un renfoncement 35 pratiqué dans le sol. La partie mobile de l'actionneur - par exemple le piston du vérin - est apte à se déplacer hors du renfoncement pour déployer la plaque respective 30a ou 30b.

Un élément de protection 36 monté pivotant sur le piston du vérin peut être associé à chaque plaque 30a, 30b. Cet élément de protection 36 permet de couvrir le renfoncement 35 dans lequel est logé le vérin lorsque les plaques 30a, 30b sont escamotées, afin de prévenir les dangers. Par ailleurs, cet élément de protection 36 permet dans une certaine mesure de bloquer l'accès aux plaques 30a, 30b lorsque le véhicule en charge afin d'éviter un risque d'électrocution.

Dans un autre mode de réalisation illustré aux figures 8'a à 8'c, chaque élément de protection est monté pivotant au niveau du sol 31, et apte à se déplacer entre une position horizontale (lorsque le véhicule est absent) et une position verticale (lorsque le véhicule est en charge au dessus des plaques) pour limiter l'accès à l'ensemble de connexion lors de la charge.

Le système de couplage comprend un support 38 comprenant des parois latérales 381 à 384 et un fond 385. Le support 38 peut être placé dans un renfoncement pratiqué dans le sol 31. Les parois latérales 381 à 384 du support 38 comprennent à leurs extrémités opposées au fond une collerette 386 s'étendant vers l'extérieur perpendiculairement à celle-ci. Ceci permet d'assurer que le support 38 effleure le sol quelque soit la profondeur du renfoncement 35.

Le système de couplage comprend un actionneur linéaire comprenant une partie fixe et une partie mobile. L'actionneur linéaire est par exemple un vérin incluant un corps de vérin 391 fixé sur le fond 385 du support 38, et un piston de vérin 392 à l'intérieur du corps de vérin 391. Une pompe électrique 393 est fixée sur le fond du support et connectée au corps de vérin 392 pour alimenter le vérin.

La plaque 30a, 30b est liée à l'extrémité du piston de vérin 392 par l'intermédiaire d'un élément de couplage flexible 395 pour permettre à la plaque 30a de pivoter autour d'au moins un axe. Dans une variante, la plaque 30a peut être liée au piston de vérin 392 par des paliers.

L'une 383 des parois latérales comporte, à son extrémité opposée au fond 385, un carré métallique 387 faisant saillie vers l'intérieur du support 38. Ce carré métallique 387 sert de socle pour une charnière 361 de l'élément de protection 36.

L'élément de protection 36 est relié au piston de vérin 392 par l'intermédiaire de biellettes 394 s'étendant entre l'extrémité libre de l'élément de protection 36 et l'extrémité du piston de vérin 392 portant la plaque 30a. Ceci permet la mise en mouvement de l'élément de protection 36 par le piston de vérin 392. Ainsi, le mouvement de la plaque 30a et de l'élément de protection 36 sont synchronisés. Bien entendu, en variante, l'élément de protection 36 peut être connecté à des moyens d'entrainement individuel tel qu'un moteur.

Avantageusement, le système de connexion peut comprendre des panneaux de protection latéraux mobiles 396 à l'intérieur du support 38. Dans le mode de réalisation illustré aux figures 8'a à 8'c, le dispositif comprend trois panneaux de protection latéraux mobiles venant en regard des trois parois latérales 381, 382, 384 du support 38 ne comprenant pas la charnière 361. Ces panneaux de protection latéraux mobiles 396 permettent de prévenir la chute d'objet (gravier, détritus, etc.) à l'intérieur du support 38 lorsque les plaques ne sont pas dans la position escamotée, par exemple lors du déploiement (respectivement de la rétractation) du piston de vérin pour amener la plaque dans la position dégagée (respectivement escamotée).

Les trois panneaux de protection latéraux mobiles 396 sont connectés à la plaque 30a par l'intermédiaire de biellettes 395. Ceci permet la mise en mouvement synchronisée de la plaque 30a, de l'élément de protection 36 et des panneaux de protection latéraux mobiles 396 par l'intermédiaire d'un unique moyen d'entrainement constitué par le piston de vérin 392 alimenté par la pompe électrique 393. Bien entendu, en variante, les panneaux de protection latéraux mobiles 396 peuvent être connectés à des moyens d'entrainement individuel tel qu'un moteur.

Le principe de fonctionnement du mode de réalisation décrit aux figures 8'a à 8'c est le suivant. Lorsque le véhicule est au dessus des plaques 30a, 30b, le piston de vérin 392 se déploie vers le haut de sorte à amener les plaques 30a, 30b dans la position dégagée (figure 8'c). Les biellettes 394 connectées entre le piston de vérin 392 et l'élément de protection 36 induisent le déplacement dudit élément de protection 36. Ce déplacement de l'élément de protection 36 induit le déplacement des panneaux de protection latéraux mobiles 396 par l'intermédiaire des biellettes 395 connectées entre l'élément de protection 36 et les panneaux de protection latéraux mobiles 396. Les panneaux de protection latéraux mobiles 396 se coulissent vers le haut le long des parois latérales du support de manière synchrone avec l'élément de protection 36.

Lorsque la charge du véhicule est terminée, le piston de vérin 392 se rétracte vers le bas de sorte à amener les plaques 30a, 30b dans la position escamotée (figure 8'b). Le mouvement du piston de vérin 392 induit le déplacement de l'élément de protection 36 vers le bas de sorte à fermer le support 38. Le déplacement de l'élément de protection 36 entraine la mise en mouvement des panneaux de protection latéraux mobiles 396 qui rentrent dans le support 38.

On a illustré à la figure 8'd une variante du mode de réalisation des figure 8'a à 8'c dans laquelle le système de connexion comprend deux éléments de protection 36. Dans cette variante, chaque élément de protection est connecté au piston de vérin par l'intermédiaire de biellettes 394. Chaque élément de protection est monté pivotant sur une paroi latérale 281, 383 respective au support par une charnière 361. Le dispositif comprend deux panneaux de protection latéraux mobiles 396 disposés au niveau des parois latérales 382, 384 du support 38 ne comprenant pas les charnières.

Dans une autre variante illustrée aux figures 8"a à 8"d, chaque élément de protection 36 est monté pivotant au niveau des panneaux de protection latéraux mobiles 396 antichute. Le système de connexion illustré aux figurés 8"a à 8"d diffère du mode de réalisation illustré aux figures 8'a à 8'c en ce que les moyens d'entrainement des panneaux de protection latéraux mobiles 396 et de l'élément de protection 36 sont différents.

Le dispositif comprend quatre panneaux de protection latéraux mobiles 396 sur trois desquels est fixé un plateau 397 s'étendant perpendiculairement aux panneaux de protection latéraux mobiles 396. Le plateau est situé au niveau des extrémités des panneaux de protection latéraux mobiles les plus éloignées du fond 385 du support 38.

La plaque 30a est fixée sur le plateau 397 par l'intermédiaire d'un élément de couplage flexible 395.

Les panneaux de protection latéraux mobiles 396 sont rendus solidaires de l'extrémité libre du piston de vérin 392 par l'intermédiaire d'une barre horizontale 398 s'étendant perpendiculairement aux des panneaux de protection latéraux mobiles. La barre horizontale 398 est fixée à l'extrémité du piston de vérin 392 et dans deux des quatre panneaux de protection latéraux mobiles 396.

L'élément de protection 36 présente la forme d'un L inversé en section. L'élément de protection 36 comprend deux parois 362, 363, l'une 362 (ci après dénommée « couvercle ») étant destinée à coiffer la plaque 30a lorsque le système est en position escamoté, et l'autre (ci après dénommée « cloison ») s'étendant perpendiculairement au couvercle et étant destinée à venir dans le prolongement de l'un 381 des panneaux de protection latéraux mobiles 396 lorsque le système est en position escamotée.

L'élément de protection 36 est monté pivotant sur les panneaux de protection latéraux mobiles 396 au niveau d'une articulation 364 dont l'axe 365 est fixé dans deux panneaux de protection latéraux mobiles en regard.

Le dispositif comprend également un moyen élastique 366 - par exemple un ressort - disposé autour de l'axe de l'articulation 365. Une extrémité 367 du moyen élastique 366 prend appui sur le plateau 397 au niveau d'une encoche (non représentée). L'autre extrémité 368 du moyen élastique 366 prend appui sur la cloison 363.

Le principe de fonctionnement du mode de réalisation décrit aux figures 8"a à 8"d est le suivant.

Lorsque le véhicule est au dessus des plaques 30a, 30b, le piston de vérin 392 se déploie de sorte à amener les plaques 30a, 30b dans la position dégagée (figure 8'c). Les panneaux de protection latéraux mobiles 396, solidaires du piston de vérin 392, se déplacent vers le haut. Le moyen élastique 366 exerce une force sur la cloison 363 qui tend à éloigner l'élément de protection 36 de la plaque 30a. La cloison 363 vient en appui contre la collerette 386 du support (figure 8"c). Ceci permet d'éviter la chute de débris dans le support 38. Lorsque la cloison 363 n'est plus en contact avec la collerette 386, la force exercée par le moyen élastique 366 écarte l'élément de protection 36 de sorte que la plaque 30a est dégagée (figures 8"a et 8"d).

Lorsque la charge du véhicule est terminée, le piston de vérin 392 se rétracte de sorte à amener les plaques 30a, 30b dans la position escamotée (figure 8"b). Le mouvement du piston de vérin 392 induit le déplacement des panneaux de protection latéraux mobiles 396. La cloison 363 vient prendre appui contre le bord de la collerette 386 de sorte à contrer la force exercée par le moyen élastique 366. Au fur et à mesure du déplacement vers le bas des panneaux de protection latéraux mobiles 396, l'élément de protection 36 se rapproche de la plaque 30a jusqu'à venir coiffer celle-ci (figure 8"b).

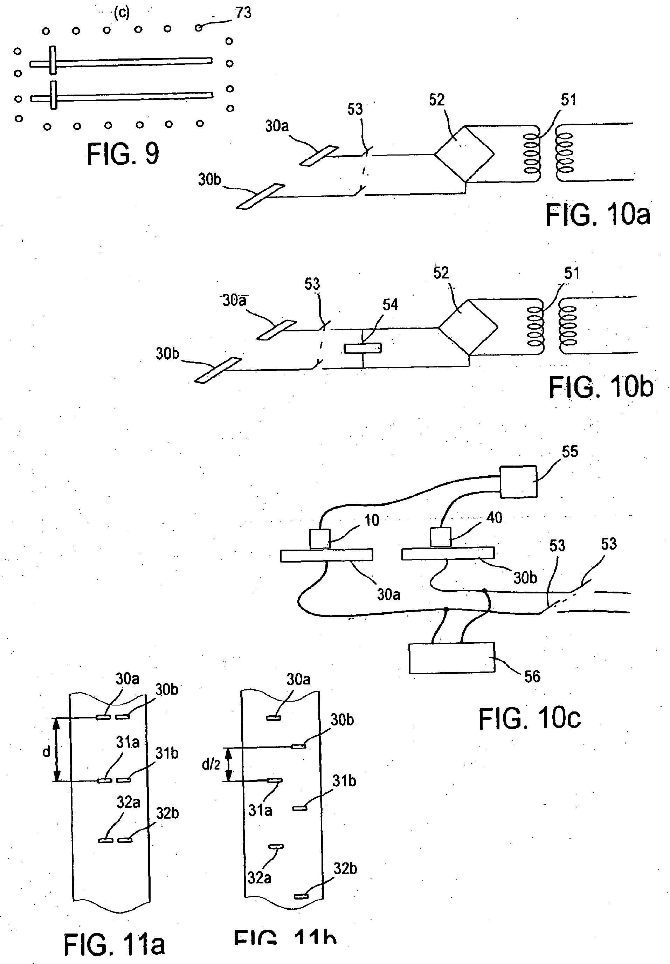

Comme illustré à la figure 9, le système de couplage peut également comprendre des moyens de détection 73 semblables aux moyens de détection 63 décrit précédemment en référence au système de connexion. Ces moyens de détection 73 sont par exemple intégrés au sol.

Comme décrit précédemment, chaque plaque 30a, 30b est connectée électriquement au dispositif de charge. Dans le mode de réalisation illustré à la figure 2, elles sont connectées au dispositif de charge par l'intermédiaire de câbles électriques 23.

Comme illustré aux figures 10a à 10c, le dispositif de charge peut comprendre un transformateur d'isolement 51 à potentiel flottant comportant un enroulement primaire et un enroulement secondaire pour augmenter la sécurité du dispositif.

Le dispositif de charge comprend également un redresseur 52 de tension pour convertir une tension alternative issue d'un réseau électrique en tension continue.

Le dispositif de charge peut également comprendre des sectionneurs 53 permettant de séparer, de façon mécanique, les plaques 30a, 30b du réseau électrique lorsque le véhicule n'est pas en position de charge. Ceci permet d'assurer la sécurité des personnes évoluant à proximité des plaques 30a, 30b lorsque le véhicule est absent.

Le dispositif de charge peut également comprendre un accumulateur électrique 54 pour accumuler de l'énergie électrique et la restituer lors de la charge des moyens de stockage du véhicule. Lorsque le véhicule se déplace au dessus des plaques 30a, 30b et que les barres 10a, 10b électriquement conductrices viennent en contact avec les plaques 30a, 30b, l'accumulateur électrique 54 restitue l'énergie électrique accumulée.

Ceci permet en tant que de besoin de recharger les moyens de stockage du véhicule avec une puissance électrique supérieure à celle du réseau électrique (cas notamment des supercondensateurs). Lorsqu'aucun véhicule n'est en charge, l'accumulateur électrique 54 accumule de l'énergie électrique provenant du réseau. Dans un mode de réalisation, le dispositif de charge comprend des moyens de contrôle de contact et de communication, illustrés sur la figure 10c sous les références 55 et 56.

Ces moyens sont aptes à analyser la qualité de contact entre les barres 10a, 10b et les plaques 30a, 30b, par exemple par mesure de l'impédance entre les barres et les plaques.

Si le contact entre les barres et les plaques est correctement établi, les moyens de contrôle commandent la mise sous tension de l'ensemble de charge. Inversement, si le contact entre les barres et les plaques n'est pas correctement établi, les moyens de contrôle interdisent la mise en charge.

Ceci permet d'éviter la mise sous tension de l'ensemble de charge lorsque les conditions nécessaires ne sont pas remplies.

Les moyens de communication 55, 56 permettent de transmettre des données entre le véhicule et le dispositif de charge lors de la charge des moyens de stockage d'énergie du véhicule. Ces données peuvent comprendre un identifiant du véhicule, la quantité d'énergie transférée, ou toute autre donnée de gestion, par exemple pour permettre la facturation de l'énergie transférée.

Selon une autre variante, le système de couplage peut comprendre plus de deux plaques 30a, 30b électriquement conductrices, dont la forme et la position peuvent par ailleurs varier.

Par exemple, le système de stockage peut comprendre six plaques 30a, 30b, 31 a, 31 b, 32a, 32b dont les grands axes sont disposés parallèlement les uns aux autres et alignées en deux groupes de trois, comme illustré aux figures 11 a et 11 b.

Dans la variante illustrée à la figure 11a, les plaques sont associées par paire, chaque plaque d'une paire étant destinée à venir en contact avec une barre électriquement conductrice respective du système de connexion. Pour chaque paire, les deux plaques peuvent avoir un grand axe confondu, comme illustré à la figure 11a, ou être disposées en quinconce comme illustré à la figure 11 b.

Le fait de multiplier le nombre de plaques permet de charger le véhicule avec une puissance électrique supérieure.

### Ensemble de connexion

On va maintenant décrire plus en détail différents agencements géométriques possibles pour l'ensemble de connexion (essentiellement barres et plaques) selon l'invention.

Dans le mode de réalisation illustré à la figure 2, les distances entre les barres du système de connexion et les plaques du système de couplage remplissent les conditions suivantes.

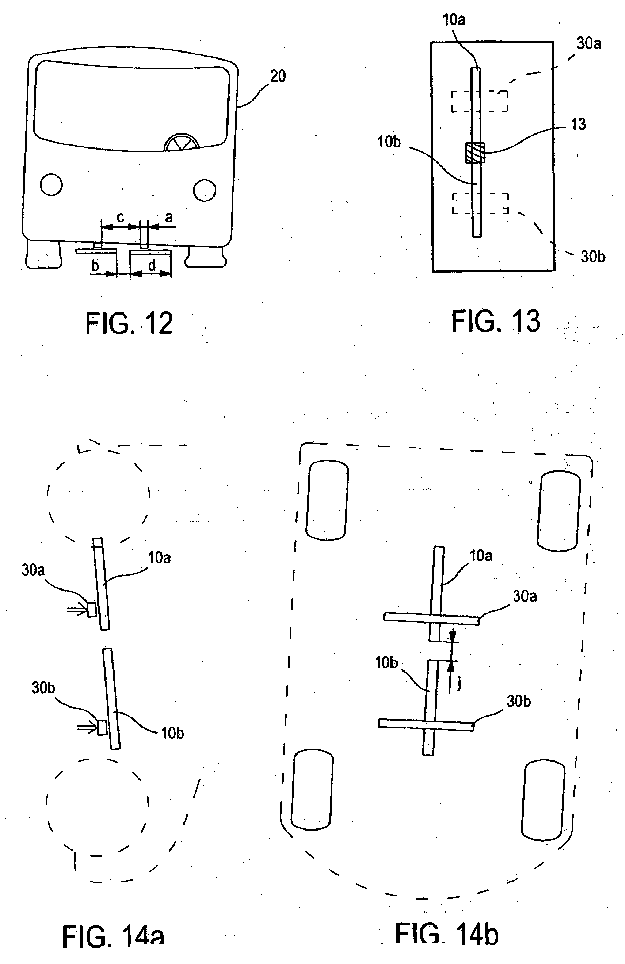

Comme illustré à la figure 12, la distance « b » entre les plaques 30a, 30b électriquement conductrices est de préférence supérieure à la largeur « a » d'une barre du système de connexion. Ceci permet d'éviter la mise en contact électrique mutuel des deux plaques par l'intermédiaire d'une seule barre, ce qui pourrait occasionner un court-circuit.

Par ailleurs, la largeur « d » (dimension transversalement au sens de déplacement du véhicule) d'une plaque 30a, 30b est inférieure à la distance « c » entre les barres 10a, 10b. Ceci permet d'éviter que les deux barres 10a, 10b puissent venir en contact avec une même plaque, ce qui risquerait de provoquer un court-circuit et des détériorations éventuelles des moyens de stockage du véhicule.

Enfin, la somme des longueurs des plaques est choisie de préférence supérieure à la dispersion de positionnement du véhicule. Ceci permet d'augmenter la tolérance dans le positionnement du véhicule par rapport aux plaques situées dans le sol.

Dans un mode de réalisation illustré à la figure 13, le système de connexion comprend une barre unique. Cette barre comporte deux segments de barre 10a, 10b conducteurs reliés entre eux par une portion de barre 13 isolante. Chaque segment de barre 10a, 10b est connecté électriquement à une borne respective des moyens de stockage.

Le système de couplage est dans ce cas adapté pour permettre la mise en contact de chaque segment 10a, 10b électriquement conducteur avec une plaque respective 30a, 30b du système de couplage. En particulier dans ce mode de réalisation, les plaques 30a, 30b du système de couplage sont disposées de façon espacée dans la direction de déplacement du véhicule.

En variante et comme illustré aux figures 14a et 14b, la portion isolante peut être remplacée par un espace vide entre les deux segments de barre 10a, 10b. Dans ce mode de réalisation, les deux segments de barre 10a, 10b sont alignés et séparés par une distance j.

Bien entendu, la barre conductrice peut comprendre plus de deux segments électriquement conducteurs, en fonction des besoins (contact de commande, nécessité de deux niveaux de tension, alimentation alternative polyphasée, etc.)

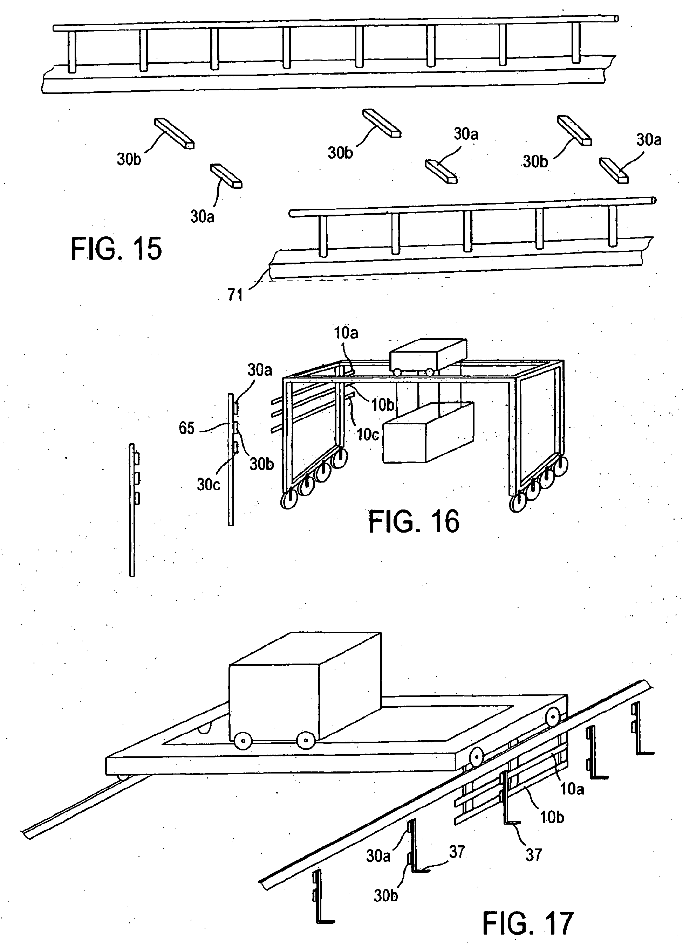

On a illustré à la figure 15 un mode de réalisation de l'ensemble de connexion selon l'invention qui est remarquable en ce qu'il autorise une recharge en roulage lorsque le véhicule circule sur une voie « de recharge » protégée 71.

Cette voie possède une succession de paires de plaques 30a, 30b alimentées électriquement lorsque le véhicule est au-dessus de celles-ci.

Les plaques sont alors soit fixes (au voisinage de la surface du sol) soit mobiles en s'élevant au dessus du sol au passage du véhicule.

La commande d'alimentation électrique des plaques et leur éventuel mouvement d'élévation sont synchronisés avec le déplacement du véhicule, qui peut être détecté par toute technologie appropriée, notamment optique, magnétique, par commande radio, etc.

Dans une telle réalisation, la largeur des plaques transversalement à la voie est choisie pour qu'un contact soit assuré avec la barre conductrice correspondante même si le véhicule s'écarte de la trajectoire idéale au centre de la voie.

Dans un autre mode de réalisation illustré à la figure 16, les barres du système de connexion peuvent être fixées sur les côtés du véhicule. Cela est approprié lorsque le véhicule est haut, par exemple un pont roulant d'une installation portuaire de porte-conteneurs. Les plaques 30a, 30b, 30c du système de couplage sont alors disposées verticalement sur des piliers latéraux 65. Les barres latérales du véhicule sont destinées à venir en contact avec les plaques 30a, 30b, 30c d'un pilier 65 pour recharger les moyens de stockage du chariot. Ce mode de réalisation permet une grande tolérance quant au positionnement en hauteur des barres sur les côtés du chariot, déterminée notamment par la hauteur des plaques.

On remarquera que le chariot comprend ici trois barres conductrices 10a, 10b, 10c destinées à venir en contact avec trois plaques respectives 30a, 30b, 30c du système de couplage. Ceci permet par exemple d'alimenter électriquement le véhicule en triphasé, ou sous deux tensions continues de charge différentes.

Dans la description qui précède, on a en général décrit le système de connexion et le système de couplage en référence à la recharge à l'arrêt du véhicule.

On a également vu qu'en variante, le système de connexion et le système de couplage selon l'invention pouvaient être utilisés pour la recharge du véhicule en mouvement. On notera que le système de connexion et le système de couplage peuvent également être adaptés à l'alimentation en continu d'un véhicule (comprenant ou non des moyens de stockage d'énergie électrique).

Dans cette variante, et de nouveau en référence à la figure 15, le système de connexion côté véhicule comprend ainsi au moins une barre électriquement conductrice positionnée dans le sens de la longueur du véhicule, et le système de couplage comprend une pluralité de plaques électriquement conductrices le long de la voie de roulement, de préférence positionnées dans le sens de la largeur du véhicule.

Le positionnement dans le sens de la hauteur des barres et des plaques peut être assuré par des moyens de mise en appui de la barre sur la plaque. Ces moyens de mise en appui sont par exemple la suspension du véhicule, en assurant que tous les véhicules aient une même distance entre les barres et le sol dans des conditions d'assiette normales.

En complément ou alternativement, on peut prévoir des moyens pour réaliser un appui entre chaque barre et les plaques associés, appui réalisée par exemple à l'aide d'une force élastique (au niveau des barres et/ou des plaques) ou encore à l'aide d'une aimantation entre chaque barre et les plaques.

La face inférieure de chaque barre et la face supérieure de chaque plaque sont réalisées dans des matériaux capables de frotter l'un sur l'autre sans compromettre la qualité du contact et sans usure excessif.

Comme on l'a vu également, es plaques 30a, 30b sont disposées par paires, et deux paires successives de plaques sont de préférence séparées d'une distance inférieure à la longueur d'une barre 10a, 10b afin d'assurer que le système de connexion du véhicule soit toujours en contact électrique avec au moins une paire de plaques.

La commande d'alimentation des paires de plaques est de préférence telle que la tension de charge est appliquée à une paire de plaques que lorsque le véhicule recouvre complètement celle-ci. L'alimentation en courant est par exemple pilotée par des boitiers enterrés dans le sol le long de la voie de charge.

Avantageusement, un balai peut être disposé à l'avant (ou aux deux extrémités) du véhicule. Ce balai permet de repousser les débris qui peuvent s'accumuler sur les plaques.

En référence à la figure 17, on a illustré un autre mode de réalisation du système de connexion et du système de couplage selon l'invention, ici encore adapté à l'alimentation en continu d'un pont roulant.

Dans ce mode de réalisation, le système de connexion comprend deux barres 10a, 10b électriquement conductrices disposées sur un côté du pont roulant. Le système de couplage comprend une pluralité de plaques. Les plaques sont disposées par paires le long du trajet du pont roulant. Chaque paire de plaques est fixée sur un support 37. Les plaques du système de couplage sont destinées à venir en contact avec les barres du système de connexion pour permettre l'alimentation électrique du pont roulant. Les supports sont espacés d'une distance horizontale inférieure à la longueur d'une barre 10a, 10b du système de connexion. Ceci permet d'assurer que les barres 10a, 10b du pont roulant sont toujours en contact avec au moins une paire de plaques du système de couplage. Chaque paire de plaques est alimentée électriquement lorsque les barres du pont roulant sont en contact avec celle-ci. La commande d'alimentation des paires de plaques peut être assurée par tout système de détection de la position du pont roulant connu de l'homme du métier.

De nombreuses modifications peuvent être apportées à la présente invention. Par exemple, le système de couplage peut comprendre une unité mécanique unique incorporant les deux plaques conductrices (ou davantage) et un élément isolant séparant les plaques de sorte à définir deux portion conductrices distinctes, chaque portion étant connectée électriquement à une borne d'une source d'alimentation électrique.

## Revendications

1. Système de connexion électrique d'un véhicule automobile à entraînement électrique (20) pour permettre de connecter électriquement des moyens de stockage d'énergie électrique du véhicule à une source électrique en vue de leur charge, **caractérisé en ce qu'**il comprend :
- au moins une barre électriquement conductrice (10a, 10b) s'étendant de manière à être accessible à partir du dessous du véhicule entre des régions avant (23) et arrière (24) de celui-ci, la ou chaque barre électriquement conductrice s'étendant parallèlement à une direction de déplacement du véhicule et comprenant une surface active électriquement conductrice connectée électriquement aux moyens de stockage d'énergie électrique du véhicule, la surface active étant destinée à venir en contact avec des moyens complémentaires de la source électrique,
- des moyens de protection pour protéger la surface active de la barre électriquement conductrice,
la barre et les moyens de protection étant aptes à se déplacer relativement l'un par rapport à l'autre entre une position dite en charge où la surface active de la barre est dégagée des moyens de protection et une position dite hors charge où la surface active de la barre est couverte par les moyens de protection.

2. Système selon la revendication précédente, dans lequel les moyens de protection sont déplaçables par rapport au châssis du véhicule.

3. Système selon l'une des revendications précédentes, dans lequel les moyens de protection comprennent au moins un capot adapté pour se déplacer par pivotement autour d'un axe de pivotement parallèle à l'axe longitudinal de la barre.

4. Système selon la revendication 3, dans lequel l'axe de pivotement et l'axe longitudinal sont situés à la verticale l'un de l'autre.

5. Système selon l'une des revendications précédentes, dans lequel le capot s'étend longitudinalement et comprend une jupe (85) à chacune de ses extrémités longitudinales, le système comprenant en outre un logement comportant des parois latérales (82) fixées sur le véhicule et un fond (86) sur lequel est fixé la barre (10a), le fond incluant des racleurs de part et d'autre de la barre agencés de sorte à venir en contact avec le capot dans la position hors charge .

6. Système selon la revendication 3, dans lequel l'axe de pivotement est situé entre l'axe longitudinal de la barre et une face latérale du véhicule.

7. Système selon la revendication 1, dans lequel la barre est déplaçable par rapport au châssis.

8. Système selon la revendication 7, dans lequel la ou chaque barre possède un corps protecteur sur lequel est montée une partie conductrice, et dans lequel la ou chaque barre est déplaçable entre une position d'utilisation où ladite partie conductrice est tournée vers le bas et dégagée et une position de non-utilisation ou ladite partie conductrice est abritée.

9. Système selon la revendication 8, dans lequel le corps protecteur est soit électriquement isolant, soit électriquement isolé de la partie conductrice.

10. Système selon l'une des revendications 7 à 9, dans lequel la ou chaque barre est déplaçable en pivotement autour d'un axe parallèle à son grand axe.

11. Système selon la revendication 10, dans lequel chaque barre présente des faces cylindriques d'axe confondu avec son axe de pivotement, et est logé dans une chambre possédant des parois venant avoisiner lesdites faces cylindriques.

12. Système selon l'une des revendications précédentes, comprenant en outre des moyens pour autoriser un jeu angulaire de la barre de sorte à permettre un contact à plat entre la barre et la plaque.

13. Système selon la revendication précédente, comprenant en outre des butées électriquement isolantes entre la barre et le planché du véhicule.

14. Système selon l'une des revendications précédentes, dans lequel au moins l'une des extrémités de la ou chaque barre électriquement conductrice comprend une spatule (11).

15. Système selon l'une des revendications précédentes, lequel comprend une barre unique comportant deux segments (10a, 10b) électriquement conducteurs reliés entre eux par une portion (13) isolante électriquement, chaque segment électriquement conducteur étant connecté électriquement à une borne respective des moyens de stockage.

16. Système selon l'une des revendications précédentes, lequel comprend deux barres électriquement conductrices (10a, 10b) connectées à des bornes respectives des moyens de stockage.

17. Système selon la revendication 16, dans lequel les deux barres (10a, 10b) s'étendent parallèlement l'une à l'autre.

18. Système selon l'une des revendications précédentes, lequel comprend des moyens de commutation (T_{princ1}, T_{princ2}) pour connecter les moyens de stockage (42) soit aux barres (10a, 10b), soit au moteur du véhicule.

19. Système selon l'une des revendications précédentes, lequel comprend des moyens de commutation (T1-T6) pour réaliser un couplage en série ou en parallèle des moyens de stockage (42).

20. Véhicule automobile à entraînement électrique, comprenant des moyens de stockage d'énergie électrique, **caractérisé en ce qu'**il comprend un système de connexion selon l'une des revendications 1 à 19.

## Patentansprüche

1. Elektrisches Verbindungssystem eines Kraftfahrzeugs mit elektrischem Antrieb (20), um das elektrische Verbinden der Mittel zur Speicherung elektrischer Energie des Fahrzeugs mit einer Stromquelle zu ermöglichen, um sie zu aufzuladen, **dadurch gekennzeichnet, dass** es Folgendes umfasst:
- mindestens eine elektrisch leitfähige Schiene (10a, 10b), die sich derart erstreckt, dass sie von der Unterseite des Fahrzeugs aus zwischen einem vorderen (23) und einem hinteren Bereich (24) von diesem zugänglich ist, wobei die oder jede elektrisch leitfähige Schiene sich parallel zu einer Fortbewegungsrichtung des Fahrzeugs erstreckt und eine elektrisch leitfähige wirksame Fläche umfasst, die elektrisch mit den Mitteln zur Speicherung elektrischer Energie des Fahrzeugs verbunden ist, wobei die wirksame Fläche dazu bestimmt ist, mit ergänzenden Mitteln der Stromquelle in Kontakt zu gelangen,
- Schutzmittel, zum Schützen der wirksamen Fläche der elektrisch leitfähigen Schiene, wobei die Schiene und die Schutzmittel geeignet sind, sich in Bezug zueinander relativ zwischen einer sogenannten Position beim Aufladen, in der die wirksame Fläche der Schiene von den Schutzmitteln abgesetzt ist, und einer sogenannten Position außerhalb des Aufladens zu verschieben, in der die wirksame Fläche der Schiene durch die Schutzmittel bedeckt ist.

2. System nach dem vorhergehenden Anspruch, wobei die Schutzmittel in Bezug zum Fahrgestell des Fahrzeugs verschiebbar sind.

3. System nach einem der vorhergehenden Ansprüche, wobei die Schutzmittel mindestens eine Haube umfassen, die angepasst ist, um sich durch Schwenken um eine Schwenkachse zu verschieben, die parallel zur Längsachse der Schiene ist.

4. System nach Anspruch 3, wobei die Schwenkachse und die Längsachse in der Vertikalen zueinander angeordnet sind.

5. System nach einem der vorhergehenden Ansprüche, wobei die Haube sich längs erstreckt und eine Verkleidung (85) an jedem ihrer Längsenden umfasst, wobei das System ferner eine Aufnahme umfasst, die Seitenwände (82), die auf dem Fahrzeug befestigt sind, und einen Boden (86) umfasst, an dem die Schiene (10a) befestigt ist, wobei der Boden Abstreifer auf beiden Seiten der Schiene umfasst, die derart angeordnet sind, dass sie mit der Haube in der Position außerhalb des Aufladens in Kontakt gelangen.

6. System nach Anspruch 3, wobei die Schwenkachse sich zwischen der Längsachse der Schiene und einer Seitenfläche des Fahrzeugs befindet.

7. System nach Anspruch 1, wobei die Schiene in Bezug zum Fahrgestell verschiebbar ist.

8. System nach Anspruch 7, wobei die oder jede Schiene einen Schutzkörper aufweist, auf dem ein leitfähiger Teil montiert ist, und wobei die oder jede Schiene zwischen einer Verwendungsposition, in der der leitfähig Teil nach unten gewandt und abgesetzt ist, und einer Nicht-Verwendungsposition verschiebbar ist, in der der leitfähige Teil geschützt ist.

9. System nach Anspruch 8, wobei der Schutzkörper entweder elektrisch isolierend oder elektrisch von dem leitfähigen Teil isoliert ist.

10. System nach einem der Ansprüche 7 bis 9, wobei die oder jede Schiene schwenkbar um eine Achse verschiebbar ist, die parallel zu ihrer Hauptachse ist.

11. System nach Anspruch 10, wobei jede Schiene zylindrische Seiten aufweist, deren Achse mit ihrer Schwenkachse zusammenfällt, und in einer Kammer untergebracht ist, die Wände aufweist, die in die Nachbarschaft der zylindrischen Seiten gelangen.

12. System nach einem der vorhergehenden Ansprüche, das ferner Mittel umfasst, um ein Winkelspiel der Leiste zuzulassen, derart, dass ein flächiger Kontakt zwischen der Schiene und der Platte ermöglicht wird.

13. System nach dem vorhergehenden Anspruch, das ferner elektrisch isolierende Anschläge zwischen der Schiene und dem Boden des Fahrzeugs umfasst.

14. System nach einem der vorhergehenden Ansprüche, wobei mindestens eines der Enden von der oder jeder elektrisch leitfähigen Schiene eine Lanzette (11) umfasst.

15. System nach einem der vorhergehenden Ansprüche, das eine einzige Leiste umfasst, die zwei elektrisch leitfähige Segmente (10a, 10b) umfasst, die untereinander durch einen elektrisch isolierenden Abschnitt (13) verbunden sind, wobei jedes elektrisch leitfähige Segment elektrisch mit einem entsprechenden Anschluss der Speicherungsmittel verbunden ist.

16. System nach einem der vorhergehenden Ansprüche, das zwei elektrisch leitfähige Schienen (10a, 10b) umfasst, die mit entsprechenden Anschlüssen der Speicherungsmittel verbunden sind.

17. System nach Anspruch 16, wobei die zwei Schienen (10a, 10b) sich parallel zueinander erstrecken.

18. System nach einem der vorhergehenden Ansprüche, das Schaltmittel (Tprinc1, Tprinc2) zum Verbinden der Speicherungsmittel (42) entweder mit den Schienen (10a, 10b) oder mit dem Motor des Fahrzeugs umfasst.

19. System nach einem der vorhergehenden Ansprüche, das Schaltmittel (T1-T6) zum Ausführen einer Reihen- oder Parallelschaltung der Speicherungsmittel (42) umfasst.

20. Kraftfahrzeug mit elektrischem Antrieb, das Mittel zur Speicherung elektrischer Energie umfasst, **dadurch gekennzeichnet, dass** es ein Verbindungssystem nach einem der Ansprüche 1 bis 19 umfasst.

## Claims

1. Electric connection system for an electric drive vehicle (20) to allow the electric connection of electric energy storage means of the vehicle with an electric source for the purpose of charging thereof, **characterized in that** it comprises:
- at least one electrically conductive bar (10a, 10b) extending so that it is accessible from underneath the vehicle between front (23) and rear (24) regions thereof, the or each electrically conductive bar extending parallel to a direction of travel of the vehicle and comprising an electrically conductive active surface electrically connected to the electric energy storage means of the vehicle, the active surface being intended to come into contact with mating means of the electric source,
- protection means to protect the active surface of the electrically conductive bar, the bar and the protection means being capable of moving relative to one another between a so-called charging position, in which the active surface of the bar is released from the protection means, and a so-called non-charging position in which the active surface of the bar is covered by the protection means.

2. The system according to the preceding claim, wherein the protection means are movable relative to the chassis of the vehicle.

3. The system according to any of the preceding claims, wherein the protection means comprise at least one cover adapted so that it can move by pivoting about a pivot axis parallel to the longitudinal axis of the bar.

4. The system according to claim 3, wherein the pivot axis and the longitudinal axis lie vertical to each other.

5. The system according to any of the preceding claims, wherein the cover extends longitudinally and comprises a skirt (85) at each of its longitudinal ends, the system further comprising a housing comprising side walls (82) attached to the vehicle and a bottom part (86) on which the bar (10a) is attached, the bottom part including scrapers either side of the bar arranged so as to come into contact with the cover in the non-charging position.

6. The system according to claim 3, wherein the pivot axis is positioned between the longitudinal axis of the bar and a side face of the vehicle.

7. The system according to claim 1, wherein the bar is movable relative to the chassis.

8. The system according to claim 7, wherein the or each bar has a protective body on which a conductive part is mounted, and wherein the or each bar is movable between an in-use position in which said conductive part is released and faces downwardly, and a non-use position in which said conductive part is sheltered.

9. The system according to claim 8, wherein the protective body is either electrically insulating or is electrically insulated from the conductive part.

10. The system according to any of claims 7 to 9, wherein the or each bar is movable by pivoting about an axis parallel to its major axis.

11. The system according to claim 10, wherein each bar has cylindrical faces whose axes merge with its pivot axis, and is housed in a chamber having walls which come to lie close to said cylindrical faces.

12. The system according to any of the preceding claims, further comprising means permitting angular play of the bar so as to allow flat contacting between the bar and the plate.

13. The system according to the preceding claim, further comprising electrically insulating abutments between the bar and the floor of the vehicle.

14. The system according to any of the preceding claims, wherein at least one of the ends of the, or of each electrically conductive bar comprises a spatula (11).

15. The system according to any of the preceding claims, which comprises a single bar having two electrically conductive segments (10a, 10b) connected together by an electrically insulating portion (13), each electrically conductive segment being electrically connected to a respective terminal of the storage means.

16. The system according to any of the preceding claims, which comprises two electrically conductive bars (10a, 10b) connected to respective terminals of the storage means.

17. The system according to claim 16, wherein the two bars (10a, 10b) extend parallel to each other.

18. The system according to any of the preceding claims, which comprises switching means (Tprinc1, Tprinc2) to connect the storage means (42) either to the bars (10a, 10b) or to the motor of the vehicle.

19. The system according to any of the preceding claims, which comprises switching means (T1-T6) to achieve coupling in series or in parallel of the storage means (42).

20. An electric drive vehicle comprising electric energy storage means, **characterized in that** it comprises a connection system according to any of claims 1 to 19.
